# EUROPÄISCHE PATENTSCHRIFT

(11) **EP 3 953 281 B1**
(45) Veröffentlichungstag und Bekanntmachung des Hinweises auf die Patenterteilung: **22.02.2023**
(21) Anmeldenummer: 20719366.5
(22) Anmeldetag: 08.04.2020
(51) Int. Cl.: B65G 51/26, B65G 51/30

(54) **ROHRPOSTSTATION MIT EINEM WERKZEUGWECHSLER**
PNEUMATIC DISPATCH STATION HAVING A TOOL CHANGER
STATION DE COURRIER PAR TUBE COMPRENANT UN ÉCHANGEUR D'OUTILS

(30) Priorität: 11.04.2019 DE 102019205185
(43) Veröffentlichungstag der Anmeldung: 16.02.2022
(73) Patentinhaber: Swisslog Healthcare GmbH, 26655 Westerstede (DE)
(72) Erfinder: VOGT, Frederick, 26384 Wilhelmshaven (DE); HELLPAP, Patrick, 26655 Westerstede (DE); REDDEMANN, Maik, 26655 Westerstede (DE)
(74) Vertreter: Oelke, Jochen
(86) Internationale Anmeldenummer: PCT/EP2020/059963
(87) Internationale Veröffentlichungsnummer: WO 2020/208055

(56) Entgegenhaltungen:
- EP-A1- 2 657 160
- CN-U- 205 114 510
- DE-A1-102015 111 533

## Beschreibung

Die Erfindung betrifft eine Rohrpoststation, aufweisend ein Stationsgehäuse mit einer Empfangsstelle und einer Ausgabestelle, sowie einer im Stationsgehäuse zwischen der Empfangsstelle und der Ausgabestelle automatisch verfahrbare Greifvorrichtung, die ausgebildet ist, eine an der Empfangsstelle eingetroffene Rohrpostbüchse automatisch zu greifen und an die Ausgabestelle zu bewegen, des Weiteren aufweisend wenigstens eine an die Ausgabestelle anschließende Entnahmestelle.

Die EP 2 620 396 B1 beschreibt eine Vorrichtung zum Prüfen des Gewichts einer Rohrpostbüchse, mit einer Hebeeinrichtung zum Anheben der Rohrpostbüchse, und mit einer Detektionseinrichtung zur Erfassung einer angehobenen Position der Rohrpostbüchse, wobei die Hebeeinrichtung einen elektromagnetischen Antrieb aufweist.

Die WO 2011/078762 A1 beschreibt eine Vorrichtung umfassend eine Ladestation zum automatischen Befüllen von zylindrischen Kapseln mit Objekten denen Adressen gegeben wurden, wobei diese Kapseln für ein pneumatisches Rohrtransportsystem geeignet sind und jede Kapsel zwei öffnungsfähige Endstücke und einen Transponder mit lesbaren Informationen über eine individuelle Kapselidentität umfasst. Diese Ladestation umfasst außerdem eine Greifvorrichtung und eine Weitergabe-Einrichtung, über welche die Greifvorrichtung zum Greifen eines Objekts automatisch relativ zu einer Kapsel in eine erste Richtung durch eine erste Kapselendstück-Öffnung bewegbar ist, um ein Objekt durch eine zweite Endstücköffnung der Kapsel zu greifen, bevor sie dann relativ zur Kapsel in eine zweite Richtung bewegbar ist, die geeignet ist, das Objekt dabei durch die zweite Endstücköffnung in die Kapsel hineinzuziehen. Die Greifvorrichtung ist dabei ausgebildet, das Objekt innerhalb der Kapsel loszulassen und sich dann relativ zur Kapsel aus der ersten Kapselendstück-Öffnung heraus zu bewegen.

Die CN 205114510 U beschreibt eine Rohrpoststation mit einer Empfangsstelle und einer Ausgabestelle, sowie eine verfahrbare Greifvorrichtung zwischen Empfangsstelle und Ausgabestelle, zum Transport einer Rohrpostbüchse von der Empfangsstelle zur Ausgabestelle, wobei an der Ausgabestelle ferner eine Entnahmestelle angeordnet ist. Die CN 205114510 U offenbart die Merkmale des Oberbegriffs des Anspruchs 1.

Aufgabe der Erfindung ist es, eine Rohrpoststation zu schaffen, die besonders zuverlässig arbeitet und insbesondere eine zuverlässige Ausgabe der durch die Rohrpostbüchse beförderten Transportgegenstände ermöglicht.

Die Aufgabe wird erfindungsgemäß gelöst durch eine Rohrpoststation, aufweisend ein Stationsgehäuse mit einer Empfangsstelle und einer Ausgabestelle, sowie einer im Stationsgehäuse zwischen der Empfangsstelle und der Ausgabestelle automatisch verfahrbare Greifvorrichtung, die ausgebildet ist, eine an der Empfangsstelle eingetroffene Rohrpostbüchse automatisch zu greifen und an die Ausgabestelle zu bewegen, des Weiteren aufweisend wenigstens eine an die Ausgabestelle anschließende Entnahmestelle, wobei die Rohrpoststation außerdem einen der Ausgabestelle zugeordneten Werkzeugwechsler aufweist, der wenigstens ein erstes Entleerungswerkzeug und ein vom ersten Entleerungswerkzeug verschiedenes zweites Entleerungswerkzeug aufweist, wobei der Werkzeugwechsler eine Antriebsvorrichtung aufweist, die ausgebildet ist, zum automatischen Bewegen wahlweise des ersten Entleerungswerkzeugs oder des zweiten Entleerungswerkzeugs in eine Arbeitsstellung, in der das jeweils ausgewählte Entleerungswerkzeug bezüglich einer an der Ausgabestelle positionierten Rohrpostbüchse ausgerichtet ist, um durch eine Stellbewegung des ausgewählten Entleerungswerkzeugs einen in der Rohrpostbüchse vorhandenen Transportgegenstand auszugeben, so dass der aus der Rohrpostbüchse ausgegebene Transportgegenstand zur Entnahmestelle gelangt.

Die Empfangsstelle bildet einen Raumabschnitt bzw. eine Kammer oder einen Lagerplatz innerhalb des Stationsgehäuses der Rohrpoststation, also diejenige Stelle innerhalb der Rohrpoststation wo die Rohrpostbüchse ankommt.

Die Ausgabestelle bildet in analoger Weise einen Raumabschnitt bzw. eine Kammer oder einen Lagerplatz innerhalb des Stationsgehäuses der Rohrpoststation, also diejenige Stelle innerhalb der Rohrpoststation wo die Rohrpostbüchse geöffnet wird und der Inhalt der Rohrpostbüchse d.h. der Transportgegenstand oder die mehreren Transportgegenstände automatisch entnommen werden.

Die Greifvorrichtung transferiert die angekommene Rohrpostbüchse automatisch von der Empfangsstelle an die Ausgabestelle. Dies kann insbesondere erfolgen, nachdem im Bereich der Empfangsstelle ein Informationsträger der an der Rohrpoststation angekommenen Rohrpostbüchse automatisch ausgelesen wurde.

Die Greifvorrichtung kann entweder zum translatorischen Verschieben der Rohrpostbüchse von der Empfangsstelle an die Ausgabestelle ausgebildet sein oder zum rotatorischen Verschwenken der Rohrpostbüchse von der Empfangsstelle an die Ausgabestelle ausgebildet sein. Gegebenenfalls kann auch eine überlagerte Bewegung mit translatorischen und rotatorischen Bewegungskomponenten zur Anwendung kommen. Im Falle eines translatorischen Verschiebens der Rohrpostbüchse von der Empfangsstelle an die Ausgabestelle kann die Greifvorrichtung an einer Lineareinheit automatisch angetrieben linear verstellbar gelagert sein. Die Greifvorrichtung kann beispielsweise zwei Greifarme aufweisen, welche gegeneinander verstellbar gelagert sind, so dass die Rohrpostbüchse von gegenüberliegenden Seiten klemmend gegriffen werden kann. Dazu können die beiden Greifarme entweder jeweils separat durch einen Motor angetrieben sein, beide Greifarme über ein Kopplungsgetriebe verbunden und mittels einem einzigen gemeinsamen Motor angetrieben sein, oder es kann gegebenenfalls auch nur ein einziger Greifarm angetrieben sein und der zweite Greifarm starr befestigt sein. Jedem Greifarm kann eine Indexeinrichtung zugeordnet sein, wobei die Greifvorrichtung wenigstens einen der Indexeinrichtung zugeordneten Sensor aufweisen kann, um die momentane Offenstellung oder Schließstellung des jeweiligen Greifarmes oder der beiden Greifarme gemeinsam zu erfassen.

Der Ausgabestelle ist eine Entnahmestelle zugeordnet. Vorzugsweise wird an der Ausgabestelle der mindestens eine Transportgegenstand durch ein Ausstoßen in einer vertikalen Richtung nach unten aus der Rohrpostbüchse ausgestoßen. Deshalb kann vorzugsweise vorgesehen sein, dass die der Ausgabestelle zugeordnete Entnahmestelle unterhalb der Ausgabestelle angeordnet ist. Dadurch kann der aus der Rohrpostbüchse ausgestoßene Transportgegenstand mittels Schwerkraft d.h. im freien Fall zur Entnahmestelle gelangen. Die Entnahmestelle kann direkt unter der Ausgabestelle angeordnet sein. In einer Abwandlung kann die Entnahmestelle versetzt zur Ausgabestelle angeordnet sein, wobei beispielsweise eine zwischen der Ausgabestelle und der Entnahmestelle angeordnete Rutsche, ein Förderband oder eine sonstige Fördervorrichtung zwischengefügt sein kann. So kann der aus der Ausgabestelle herabfallende Transportgegenstand in die Entnahmestelle rutschen.

Die Arbeitsstellung des ersten Entleerungswerkzeugs und des zweiten Entleerungswerkzeugs kann vorzugsweise dadurch gekennzeichnet sein, dass das erste Entleerungswerkzeug bzw. das zweite Entleerungswerkzeug sich unmittelbar vertikal über der an der Ausgabestelle positionierten Rohrpostbüchse befindet. In diesem Fall kann das erste Entleerungswerkzeug bzw. das zweite Entleerungswerkzeug durch eine bloße vertikale Bewegung nach unten in den Hohlraum der geöffneten Rohrpostbüchse eindringen, um den in der Rohrpostbüchse befindlichen Transportgegenstand nach unten auszuschieben bzw. auszusto-βen. In diesem Zustand sind sowohl der obere Büchsendeckel, als auch der untere Büchsendeckel in einer Offenstellung.

Die Rohrpoststation kann in einer bevorzugten Ausführung eine Informationserfassungseinrichtung aufweisen, die ausgebildet ist, einen Informationsträger einer in der Rohrpoststation angekommenen Rohrpostbüchse zu erfassen, indem aus dem Informationsträger wenigstens eine Information mittels der Informationserfassungseinrichtung ausgelesen wird, wobei die Antriebsvorrichtung des Werkzeugwechslers ausgebildet ist, angesteuert durch eine Steuervorrichtung in Abhängigkeit der durch die Informationserfassungseinrichtung ausgelesenen Information entweder das erste Entleerungswerkzeug oder das zweite Entleerungswerkzeug automatisch in die Arbeitsstellung zu bewegen.

Der Informationsträger ist an der Rohrpostbüchse angeordnet. Insbesondere kann der Informationsträger an dem Grundgehäuse d.h. an dem hohlen Rohrstück der Rohrpostbüchse oder an einem oder beiden seiner beiden Büchsendeckel angeordnet sein. Der Informationsträger kann im einfachsten Fall ein Aufkleber mit einem Code, insbesondere einem Barcode oder einem QR-Code sein. Alternativ oder ergänzend kann der Informationsträger beispielsweise auch ein Chip, ein Transponder oder ein RFID-Tag sein. Der Informationsträger kann insoweit vorzugsweise berührungslos auslesbar sein. Gegebenenfalls kann die Informationserfassungseinrichtung demgemäß ein Scanner, insbesondere Laserscanner, eine Kamera oder ein RFID-Lesegerät sein.

Die Steuervorrichtung kann in das Stationsgehäuse der Rohrpoststation integriert sein. Die Steuervorrichtung kann insoweit Teil der Rohrpoststation sein. Alternativ kann die Steuervorrichtung auch separat von der Rohrpoststation angeordnet sein und lediglich mit der Rohrpoststation verbunden sein d.h. mit ihr kommunizieren, beispielsweise drahtgebunden oder drahtlos.

Der Werkzeugwechsel kann einen in dem Stationsgehäuse automatisch verstellbaren Schlitten aufweisen, an dem das erste Entleerungswerkzeug und das zweite Entleerungswerkzeug zueinander benachbart angeordnet sind, wobei der Schlitten zwischen einer ersten Schlittenstellung, in der sich das erste Entleerungswerkzeug in seiner Arbeitsstellung befindet und einer zweiten Schlittenstellung, in der sich das zweite Entleerungswerkzeug in seiner Arbeitsstellung befindet, hin und her verstellbar ist.

Der Werkzeugwechsel kann entweder zum translatorischen Verstellen des ersten Entleerungswerkzeugs und des zweiten Entleerungswerkzeugs ausgebildet sein oder zum rotatorischen Verschwenken des ersten Entleerungswerkzeugs und des zweiten Entleerungswerkzeugs ausgebildet sein. Gegebenenfalls kann auch eine überlagerte Bewegung mit translatorischen und rotatorischen Bewegungskomponenten für das Verstellen des ersten Entleerungswerkzeugs und des zweiten Entleerungswerkzeugs mittels des Werkzeugwechsels zur Anwendung kommen.

Das erste Entleerungswerkzeug kann wenigstens einen höhenverstellbar gelagerten Finger aufweisen, der an einem ersten Hubschlitten mittels eines ersten Motors automatisch in seiner Höhe einstellbar ist und zwar zumindest in eine erste Höhenlage, in welcher sich der wenigstens eine Finger in einer Verwahrungsposition entfernt von der Ausgabestelle befindet, so dass eine Rohrpostbüchse mittels der Greifvorrichtung an die Ausgabestelle gebracht werden kann, und eine zweite Höhenlage, in welcher der wenigstens eine Finger in eine an der Ausgabestelle positionierte und geöffnete Rohrpostbüchse eingreift, um den in der Rohrpostbüchse vorhandenen Transportgegenstand auszugeben.

Das erste Entleerungswerkzeug kann wenigstens einen höhenverstellbar gelagerten Finger aufweisen. Dies bedeutet, dass in der einfachsten Ausführung das erste Entleerungswerkzeug lediglich einen einzigen Finger aufweisen kann. Alternativ kann das erste Entleerungswerkzeug jedoch bevorzugt zwei, drei oder mehrere Finger aufweisen. Beispielsweise können Varianten mit 6, 8, 10 oder 12 Fingern vorgesehen sein. Die mehren Finger können insbesondere paarweise gruppiert, in Reihen und Spalten und/oder versetzt zueinander, kreuzförmig und/oder sternförmig angeordnet sein. Generell können die mehren Finger von geraden Stäben gebildet werden, die bevorzugt alle parallel zueinander ausgerichtet gruppiert sind. Im Allgemeinen werden alle vorhandenen Finger gemeinsam angehoben bzw. gemeinsam abgesenkt. Die höhenverstellbar gelagerten Finger können passiv verstellbar bzw. antriebslos ausgebildet sein, d.h. sie können ohne einem aktiven Antrieb ausgebildet sein. Die höhenverstellbar gelagerten Finger können demgemäß vorzugsweise gleitend in einer Fingerführung leicht verschiebbar gelagert sein.

Der wenigstens eine Finger kann in einer mit dem ersten Hubschlitten verbundenen Fingerführung höhenverschiebbar gelagert sein, wobei der wenigstens eine Finger an seinem oberen Ende mit einem Gewicht und/oder einem Anschlag versehen ist, wobei der wenigstens eine Finger, das Gewicht und/oder der Anschlag ausgebildet sein, mittels Schwerkraftwirkung des Eigengewichts des wenigstens einen Fingers, des Gewichts und/oder des Anschlags den wenigstens einen Finger in seine zweite Höhenlage zu treiben und aufgrund der höhenverschiebbaren Lagerung mittels der Fingerführung der wenigstens eine Finger in Richtung der ersten Höhenlage ausweichen kann, wenn sich der Hubschlitten nach unten bewegt und die zum Ausgeben des Transportgegenstandes aus der Rohrpostbüchse notwendige Ausgabekraft die durch das Eigengewicht des wenigstens einen Fingers, des Gewichtes und/oder des Anschlags konstruktiv vorbestimmte Gewichtskraft übersteigt.

Falls der wenigstens eine Finger oder die mehreren Finger ein ausreichendes Eigengewicht aufweisen, kann gegebenenfalls auf ein jeweiliges separates Gewicht verzichtet werden. Wenn jedoch beispielsweise die Finger aus relativ leichtem Kunststoff sind, können Gewichte d.h. Zusatzgewichte beispielsweise in Form von Metallkörpern, insbesondere Edelstahlzylindern an den oberen Enden der stabförmigen Finger vorgesehen sein. Damit die Finger durch den Hubschlitten bzw. die Fingerführung angehoben werden können, verfügen die Finger zumindest über jeweils einen Anschlag, so dass sie gleichmäßig angehoben werden können.

Die Rohrpoststation kann einen dem wenigstens einen Finger zugeordneten Positionssensor aufweisen, der ausgebildet ist, ein Anheben des wenigstens einen Fingers relativ zur Fingerführung zu detektieren, wenn während eines Absenkens des Hubschlittens die Fingerführung von der ersten Höhenlage für den wenigstens einen Finger sich in die zweite Höhenlage für den wenigstens einen Finger bewegt.

Der Positionssensor oder die Positionssensoren sind ausgebildet, eine relative Bewegung der Finger oder eines jeweiligen Fingers zur Fingerführung erfassen zu können. Normalerweise würden alle Finger gleichmäßig in die geöffnete Rohrpostbüchse eindringen, so dass alle Finger mit ihren Anschlägen gleichmäßig relativ zur Fingerführung positioniert bleiben und der Positionssensor oder die Positionssensoren keine Bewegung der Finger wahrnehmen. Stößt jedoch mindestens ein Finger gegen ein Hindernis, wie beispielsweise ein in der Rohrpostbüchse verklemmter Transportgegenstand, so wird der betreffende Finger oder die betreffenden Finger relativ zur Fingerführung angehoben und der Positionssensor oder die Positionssensoren nehmen eine Bewegung der betreffenden Finger wahr. Dies weist auf eine Fehlfunktion hin, die dann automatisch signalisiert werden kann.

Das zweite Entleerungswerkzeug kann eine höhenverstellbar gelagerte Bürste aufweisen, die an einem zweiten Hubschlitten mittels eines zweiten Motors automatisch in ihrer Höhe einstellbar ist und zwar zumindest in eine erste Höhenlage, in welcher sich die Bürste in einer Verwahrungsposition entfernt von der Ausgabestelle befindet, so dass eine Rohrpostbüchse mittels der Greifvorrichtung an die Ausgabestelle gebracht werden kann, und eine zweite Höhenlage, in welcher eine an der Ausgabestelle positionierte und geöffnete Rohrpostbüchse von der Bürste durchdrungen ist.

Die Rohrpoststation kann in allen Ausführungen eine der Ausgabestelle zugeordnete Öffnungsvorrichtung aufweisen, die ausgebildet ist, sowohl einen an dem oberen Ende der Rohrpostbüchse vorhandenen ersten Büchsendeckel zu öffnen, als auch einen an dem gegenüberliegenden unteren Ende der Rohrpostbüchse vorhandenen zweiten Büchsendeckel zu öffnen.

Die Rohrpoststation kann in allen Ausführungen einen unterhalb der Ausgabestelle angeordneten Separator aufweisen, der ausgebildet ist, in Abhängigkeit der durch die Informationserfassungseinrichtung ausgelesenen Information aus dem Informationsträger der in der Rohrpoststation angekommenen Rohrpostbüchse, den mittels des ersten Entleerungswerkzeugs oder des zweiten Entleerungswerkzeugs aus der Rohrpostbüchse ausgegebenen Transportgegenstand entweder in eine erste Ausgabeschütte der Rohrpoststation auszugeben oder in eine von der ersten Ausgabeschütte verschiedene zweite Ausgabeschütte der Rohrpoststation auszugeben.

Die Ausgabestelle, die Entnahmestelle und/oder der Separator können einen Störungssensor aufweisen, der ausgebildet ist, einen an der Ausgabestelle, an der Entnahmestelle und/oder an dem Separator hängengebliebenen Transportgegenstand zu detektieren und ein die Störung kennzeichnendes Störungssignal zu erzeugen.

Ein beispielhafter Ablauf der Ankunft und der Behandlung einer Rohrpostbüchse in einer typischen Konfiguration einer erfindungsgemäßen Rohrpoststation kann wie im Folgenden beschrieben werden.

Zunächst erfolgt die Ankunft der Rohrpostbüchse auf einem Motorschieber in der Rohrpoststation. Der Motorschieber bildet einen stirnseitigen Endabschluss am Ende des Rohrpostrohres, an dem die eintreffende Rohrpostbüchse abgebremst und angehalten wird. Der Motorschieber kann dazu einen antriebsbetätigte Schiebeplatte aufweisen, welche im Zustand der Förderung der Rohrpostbüchse in dem Rohrpostrohr geöffnet ist, so dass je nachdem Luft von außerhalb des Rohrpostrohres angesaugt oder Luft aus dem Rohrpostrohr ausgeblasen werden kann. In der geschlossenen Stellung der Schiebeplatte verschließt die Schiebeplatte zumindest teilweise oder vollständig das offene Stirnende des Rohrpostrohres, so dass beim Eintreffen einer herannahenden Rohrpostbüchse ein Luftpolster mit erhöhter Luftdichte durch Luftrückstau erzeugt wird und die Rohrpostbüchse an diesem Luftpolster abgebremst und weich angehalten wird. Nachdem die Rohrpostbüchse zumindest annähernd oder vollständig zum Stehen gekommen ist, öffnet sich der Motorschieber automatisch und die Rohrpostbüchse kann in die sich anschließende Empfangsstelle gelangen.

Die Empfangsstelle bildet einen Raumabschnitt bzw. eine Kammer oder einen Lagerplatz innerhalb des Stationsgehäuses der Rohrpoststation. An dieser Empfangsstelle erfolgt bei Transportabschluss eine Empfangslesung. Die Empfangslesung kann ein optisches Erfassen der Rohrpostbüchse umfassen und/oder ein Auslesen eines im Büchsenkopf oder in einem der Büchsendeckel der Rohrpostbüchse befindlichen Informationsträgers, wie beispielsweise eines RFID-Transponders sein.

Die jeweilige Stellung des Separators bzw. dessen Stellklappe auf eine erste Stellung oder eine zweite Stellung wird in Abhängigkeit der zum aktuellen Transportgegenstand im System hinterlegten Informationen automatisch eingestellt. Aufgrund derselben Informationen wird eine Werkzeugauswahl getroffen, so dass in Abhängigkeit der im System zur identifizierten Rohrpostbüchse die in der Rohrpoststation angekommene Rohrpostbüchse entweder mittels des ersten Entleerungswerkzeugs oder des zweiten Entleerungswerkzeugs entleert wird, wenn sie sich in der Ausgabestelle befindet.

Zuvor wird jedoch mit Öffnen des Motorschiebers die Rohrpostbüchse zunächst an einen Liftmechanismus übergeben. Die Rohrpostbüchse wird im Liftmechanismus heruntergefahren und auf einen Drehteller gebracht. Eine beispielsweise an einer Lineareinheit verstellbar gelagerte Greifvorrichtung hält zunächst und ergreift die auf dem Drehteller befindliche Rohrpostbüchse. Die auf dem Drehteller befindliche Rohrpostbüchse wird durch Drehen in eine gewünschte korrekte Position gebracht, beispielsweise detektiert durch einen stationsseitigen Reed-Kontakt, der in der richtigen Drehstellung der Rohrpostbüchse einen an einer diskreten Stelle am Umfang der Rohrpostbüchse angeordneten Magneten der Rohrpostbüchse detektiert, so dass später an der Öffnungsvorrichtung die Büchsendeckel sich bereits in der richtigen Ausrichtung befinden und somit automatisch geöffnet werden können.

Nun erfasst der an der Lineareinheit befindliche Greifer die Rohrpostbüchse und bewegt diese zur Öffnungsvorrichtung.

Die Büchsendeckel werden beispielsweise an der Entnahmestelle insbesondere durch Führungsrollen, die an jeweils einer schwenkbaren Öffnungsgabel der Öffnungsvorrichtung drehbar gelagert sind, mit einer Drehbewegung um die Rotationsachse der Büchsendeckelbefestigung verdreht, um die Büchsendeckel aufzuschwenken, so dass der Innenraum der Rohrpostbüchse zugänglich ist. Die Drehrichtung für die beiden gegenüberliegenden Büchsendeckel kann dabei vorzugsweise invers ausgeführt werden, um die gegenüberstehenden Büchsendeckel gleichzeitig in ihre jeweilige Öffnungsposition zu verfahren. Die Endpositionen der vollständig geöffneten Büchsendeckel können beispielsweise durch entsprechende Sensoren an Nocken, die sich an den Antriebswellen der schwenkbaren Öffnungsgabeln befinden, erfasst werden.

Das jeweilige Entleerungswerkzeug, das je nach Rohrpostbüchse bzw. je nach gefördertem Transportgegenstand zum Einsatz kommen soll, wird für den Auswurf des Inhaltes d.h. des Transportgegenstandes senkrecht beispielsweise von oben nach unten durch die Rohrpostbüchse verfahren, wodurch die Entleerung der Rohrpostbüchse sichergestellt wird. Nach Erreichen der Endposition wird das benutzte Entleerungswerkzeug nach Auswurf des Inhaltes d.h. des Transportgegenstandes wieder senkrecht von unten nach oben in seine Ausgangsposition zurück bewegt. Analog zum Öffnungsvorgang der Rohrpostbüchse erfolgt das Schließen der Büchsendeckel in entgegengesetzter Drehrichtung.

Ein unter der Öffnungsvorrichtung befindlicher Separator ermöglicht die Separierung der empfangenden Inhalte nach vom Kunden fachlich vorgegebenen Kriterien.

Die Rohrpostbüchse wird anschließend durch die automatisch verfahrbare Greifvorrichtung beispielsweise zu einem Lift der Rohrpoststation d.h. zu einer Sendestelle der Rohrpoststation bewegt. Beispielsweise ein optischer Sensor kann die Rohrpostbüchse erfassen und den Sendevorgang initiieren. Die Rohrpostbüchse wird abschließend mit Hilfe eines Liftmechanismus nach oben gefahren und wieder in das Rohrpostrohr des Rohrpostsystems zu dessen Abtransport eingeschleust.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer beispielhaften erfindungsgemäßen Rohrpoststation bei abgenommenem Frontdeckel und mit einer beispielhaften Rohrpostbüchse,
- Fig. 2: eine perspektivische Teildarstellung einer beispielhaften erfindungsgemäßen automatisch verfahrbaren Greifvorrichtung der Rohrpoststation gemäß Fig. 1,
- Fig. 3: eine perspektivische Teildarstellung einer beispielhaften erfindungsgemäßen Öffnungsvorrichtung der Rohrpoststation gemäß Fig. 1,
- Fig. 4: eine perspektivische Teildarstellung eines beispielhaften erfindungsgemäßen Werkzeugwechslers der Rohrpoststation gemäß Fig. 1 mit einem ersten Hubschlitten für ein Fingerwerkzeug in einer Ansicht von unten,
- Fig. 5: eine perspektivische Teildarstellung eines beispielhaften erfindungsgemäßen Werkzeugwechslers der Rohrpoststation gemäß Fig. 1 mit einem ersten Hubschlitten für ein Fingerwerkzeug in einer Ansicht von oben,
- Fig. 6: eine perspektivische Teildarstellung des beispielhaften erfindungsgemäßen Werkzeugwechslers der Rohrpoststation gemäß Fig. 1 mit einem vom ersten Hubschlitten für ein Fingerwerkzeug verschieden ausgeführten zweiten Hubschlitten für ein Bürstenwerkzeug,
- Fig. 7a: eine Schnittdarstellung einer beispielhaften Ausführung eines erfindungsgemäβen Separators,
- Fig. 7b: eine perspektivische Darstellung des Separators gemäß Fig. 7a in einer Ansicht von oben,
- Fig. 7c: eine perspektivische Darstellung des Separators gemäß Fig. 7a in einer Ansicht von unten.

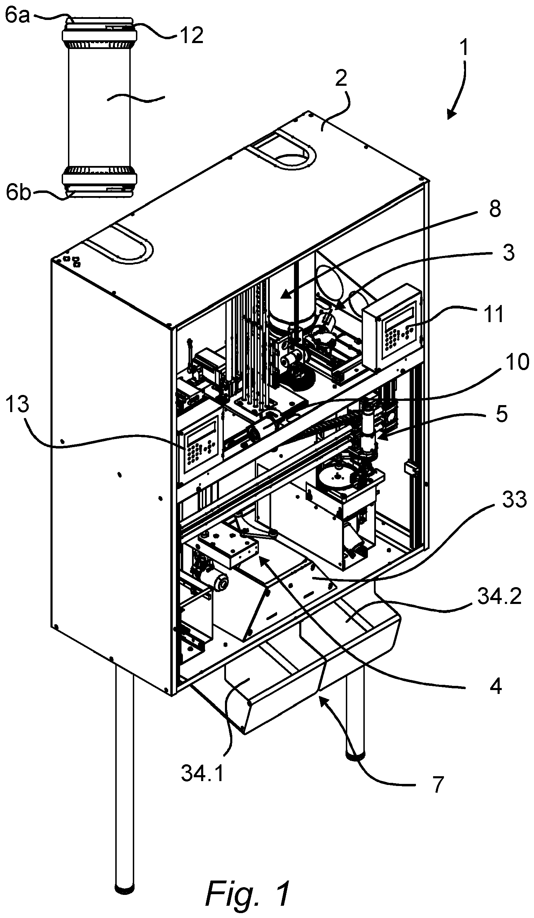

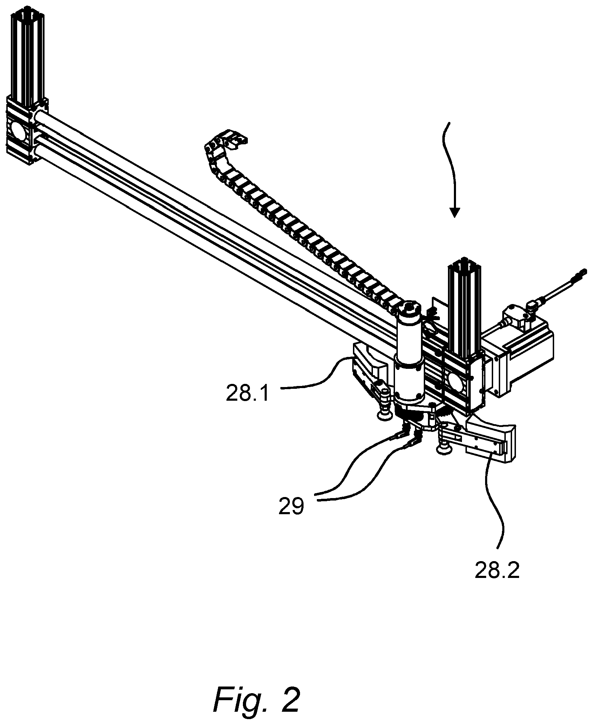

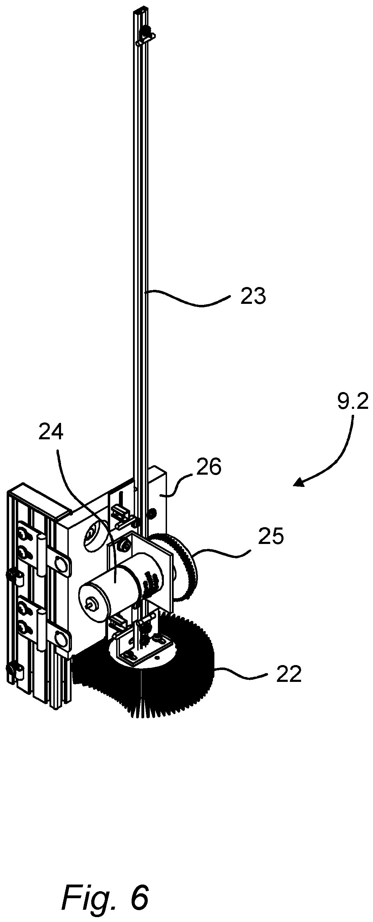

Die Figuren 1 bis 7c zeigen eine beispielhafte repräsentative Ausführungsform einer erfindungsgemäßen Rohrpoststation 1.

Wie in Fig. 1 dargestellt weist die Rohrpoststation 1 ein Stationsgehäuse 2 mit einer Empfangsstelle 3 und einer Ausgabestelle 4 auf. Die Rohrpoststation 1 weist außerdem eine im Stationsgehäuse 2 zwischen der Empfangsstelle 3 und der Ausgabestelle 4 automatisch verfahrbare Greifvorrichtung 5 auf.

Die Greifvorrichtung 5 ist ausgebildet, eine an der Empfangsstelle 3 eingetroffene Rohrpostbüchse 6 automatisch zu greifen und an die Ausgabestelle 4 zu bewegen.

Die Rohrpoststation 1 umfasst auch wenigstens eine an die Ausgabestelle 4 anschließende Entnahmestelle 7 auf.

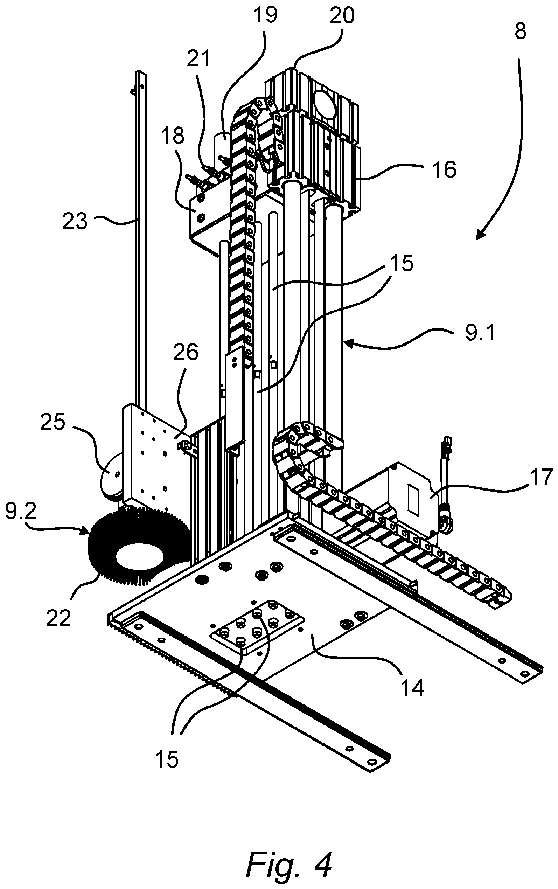

Erfindungsgemäß weist die Rohrpoststation 1, wie insbesondere in Fig. 4 bis Fig. 6 gezeigt ist, einen der Ausgabestelle 4 zugeordneten Werkzeugwechsler 8 auf, der wenigstens ein erstes Entleerungswerkzeug 9.1 und ein vom ersten Entleerungswerkzeug 9.1 verschiedenes zweites Entleerungswerkzeug 9.2 aufweist.

Der Werkzeugwechsler 8 (insbesondere Fig. 4 bis Fig. 6) weist eine Antriebsvorrichtung 10 auf, die ausgebildet ist, zum automatischen Bewegen wahlweise des ersten Entleerungswerkzeugs 9.1 oder des zweiten Entleerungswerkzeugs 9.2 in eine Arbeitsstellung, in der das jeweils ausgewählte Entleerungswerkzeug 9.1, 9.2 bezüglich einer an der Ausgabestelle 4 positionierten Rohrpostbüchse 6 ausgerichtet ist, um durch eine Stellbewegung des ausgewählten Entleerungswerkzeugs 9.1, 9.2 einen in der Rohrpostbüchse 6 vorhandenen Transportgegenstand auszugeben, so dass der aus der Rohrpostbüchse 6 ausgegebene Transportgegenstand zur Entnahmestelle 7 gelangt.

Eine Informationserfassungseinrichtung 11 der Rohrpoststation 1 ist ausgebildet, einen Informationsträger 12 einer in der Rohrpoststation 1 angekommenen Rohrpostbüchse 6 zu erfassen, aus dem Informationsträger 12 Signale bzw. Daten auszulesen und zu verarbeiten, wobei aus dem Informationsträger 12 der Rohrpostbüchse 6 beispielsweise drahtlos mittels einer in der Nähe der angekommenen Rohrpostbüchse 6 angeordnete Antenne, wenigstens eine Information mittels der Informationserfassungseinrichtung 11 ausgelesen wird, wobei die Antriebsvorrichtung 10 des Werkzeugwechslers 8 ausgebildet ist, angesteuert durch eine Steuervorrichtung 13 in Abhängigkeit der durch die Informationserfassungseinrichtung 11 ausgelesenen Information entweder das erste Entleerungswerkzeug 9.1 oder das zweite Entleerungswerkzeug 9.2 automatisch in die Arbeitsstellung zu bewegen. Die Steuervorrichtung 13 kann, wie in Fig. 1 dargestellt, zumindest teilweise oder vollständig einen Teil der Rohrpoststation 1 bilden oder aber auch separat von der Rohrpoststation 1 angeordnet sein, beispielsweise in Form einer nicht näher gezeigten, von der Rohrpoststation 1 ortsfernen Anlagensteuerung (SPS).

Der Werkzeugwechsel 8 umfasst dazu einen in dem Stationsgehäuse 2 automatisch verstellbaren Schlitten 14 (Fig. 4), an dem das erste Entleerungswerkzeug 9.1 und das zweite Entleerungswerkzeug 9.2 zueinander benachbart angeordnet sind, wobei der Schlitten 14 zwischen einer ersten Schlittenstellung, in der sich das erste Entleerungswerkzeug 9.1 in seiner Arbeitsstellung befindet und einer zweiten Schlittenstellung, in der sich das zweite Entleerungswerkzeug 9.2 in seiner Arbeitsstellung befindet, hin und her verstellbar ist.

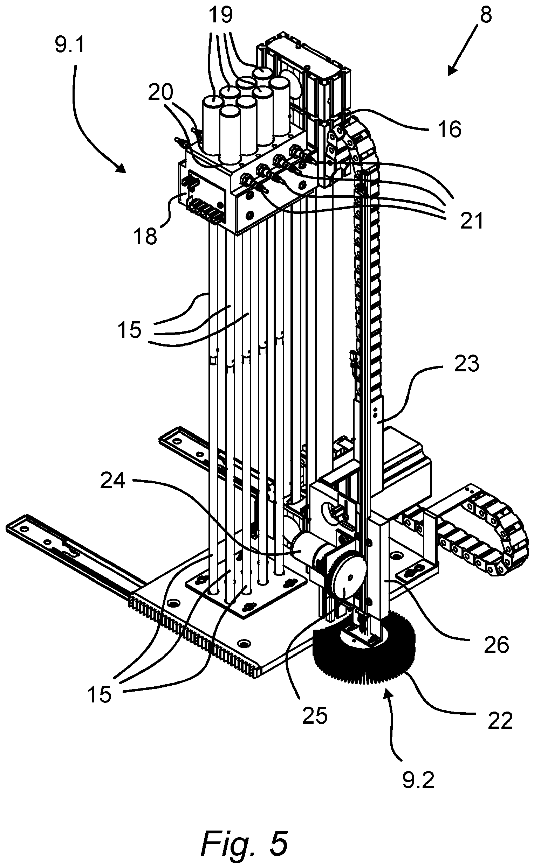

Wie insbesondere die Fig. 4 und Fig. 5 zeigt, weist das erste Entleerungswerkzeug 9.1 wenigstens einen höhenverstellbar gelagerten Finger 15 - im Fall des vorliegenden Ausführungsbeispiels genau acht Finger 15 auf, die an einem ersten Hubschlitten 16 mittels eines ersten Motors 17 automatisch in ihren Höhen einstellbar sind und zwar zumindest in eine erste Höhenlage, in welcher sich die Finger 15 in einer Verwahrungsposition entfernt von der Ausgabestelle 4 befindet, so dass eine Rohrpostbüchse 6 mittels der Greifvorrichtung 5 an die Ausgabestelle 4 gebracht werden kann, und eine zweite Höhenlage, in welcher die Finger 15 in eine an der Ausgabestelle 4 positionierte und geöffnete Rohrpostbüchse 6 eingreift, um den in der Rohrpostbüchse 6 vorhandenen Transportgegenstand auszugeben.

Die Finger 15 sind in einer mit dem ersten Hubschlitten 16 verbundenen Fingerführung 18 höhenverschiebbar gelagert, wobei die Finger 15 an ihren oberen Enden jeweils mit einem Gewicht 19 und/oder einem Anschlag 20 versehen sind, wobei die Finger 15, die Gewichte 19 und die Anschläge 20 ausgebildet sind, mittels Schwerkraftwirkung des Eigengewichts des jeweiligen Fingers 15, des jeweiligen Gewichts 19 und/oder des jeweiligen Anschlags 20 den zugeordneten Finger 15 in seine zweite Höhenlage zu treiben und aufgrund der höhenverschiebbaren Lagerung mittels der Fingerführung 18 der Finger 15 in Richtung der ersten Höhenlage ausweichen kann, wenn sich der Hubschlitten 16 nach unten bewegt und die zum Ausgeben des Transportgegenstandes aus der Rohrpostbüchse 6 notwendige Ausgabekraft die durch das Eigengewicht des wenigstens einen Fingers 15, des Gewichtes 19 und/oder des Anschlags 20 konstruktiv vorbestimmte Gewichtskraft übersteigt. Die Gewichte 19 sind insoweit jeweils an einem oberen Ende jeden stabförmigen Fingers 15 angeordnet. Die Gewichte 19 stellen nicht nur eine zusätzliche Masse bereit, um die Gewichtskraft zu erhöhen, sondern die Gewichte 19 sind in dieser speziellen Ausführungsform auch in ihren Durchmessern gegenüber den Durchmessern der Finger 15 vergrößert, so dass am jeweiligen oberen Ende des Fingers ein Absatz oder eine Stufe im Durchmesser gebildet wird, der den Anschlag 20 darstellt und somit die Finger 15 in der Fingerführung 18 gehalten sind, d.h. es verhindert ist, dass die Finger 15 vollständig nach unten aus der Fingerführung 18 herausrutschen.

Die Rohrpoststation 1 weist in dem dargestellten Ausführungsbeispiel auch den Fingern 15 zugeordnete Positionssensoren 21 auf, die jeweils ausgebildet sind, ein Anheben des jeweiligen Fingers 15 relativ zur Fingerführung 18 zu detektieren, wenn während eines Absenkens des Hubschlittens 16 die Fingerführung 18 von der ersten Höhenlage für den Finger 15 sich in die zweite Höhenlage für den Finger 15 bewegt.

Der Werkzeugwechsler 8 bildet insoweit eine Plattform die mit zwei Werkzeugen, dem ersten Entleerungswerkzeug 9.1 und dem zweiten Entleerungswerkzeug 9.2, und zwar einem Fingermodul (Finger 15) und einer Bürste 22, ausgestattet ist. Diese Plattform ist auf zwei Teleskopschienen montiert und ermöglicht somit das Verstellen dieser Plattform in horizontaler Richtung.

Das so genannte Fingermodul besteht aus einer vertikal ausgerichteten Lineareinheit an dessen Schlitten eine Trägerplattform montiert ist. An dieser Plattform ist beispielsweise ein Kunststoffblock mit Fräsungen montiert, in die wiederum die Kunststoffrundstäbe, d.h. die Finger 15, eingelassen sind.

Die Finger werden beispielsweise durch Edelstahlgewichte (Gewichte 19) in Position gehalten und durch die Lineareinheit vertikal verfahren. Dadurch wird das Auswerfen von Transportgegenständen, wie beispielsweise Blutprobenröhrchen (Proben), aus dafür vorgesehene spezielle Rohrpostbüchsen 6 ermöglicht. Die Gewichte 19 an den Fingern 15 sind darauf ausgelegt, die besagten Proben auszustoßen. Bei einem Verklemmen der Proben innerhalb der Rohrpostbüchse 6 werden diese jedoch angehoben. Sobald dieser Störfall eintritt, wird dies durch seitlich am Trägerblock montierte Sensoren (Positionssensoren 21) erfasst. Die beiden Endlagen der Lineareinheit sind durch eine Software (der Steuerung 13 oder einer separaten Anlagensteuerung/SPS) vorgegeben.

Das zweite Werkzeug ist die Bürsteneinheit. Hier ist eine Rundbürste (Bürste 22) am Ende einer Schiene 23 befestigt, an der wiederum eine Zahnstange eingelassen ist. Über ein beispielsweise an einem Gleichstrommotor 24 befindliches Zahnrad 25 kann die Bürste 22 in die beiden Endpositionen vertikal verfahren werden. Die Endlagen werden durch Näherungsschalter an der Grundplatte sowie Magnete an der Zahnstange ermittelt.

Die Werkzeugauswahl wird in Abhängigkeit der im System zur identifizierten Rohrpostbüchse 6 hinterlegten Informationen, getroffen. Das Werkzeug (erstes Entleerungswerkzeug 9.1 oder zweites Entleerungswerkzeug 9.2) für den Auswurf des Inhaltes wird senkrecht von oben nach unten durch die Rohrpostbüchse 6 verfahren, wodurch die Entleerung der Rohrpostbüchse 6 sichergestellt wird. Nach Erreichen der Endposition wird das ausgewählte Werkzeug für den Auswurf des Inhaltes senkrecht von unten nach oben in seine Ausgangsposition zurück verfahren.

Das zweite Entleerungswerkzeug 9.2 weist insoweit eine höhenverstellbar gelagerte Bürste 22 auf, die an einem zweiten Hubschlitten 26 mittels eines zweiten Motors 24 automatisch in ihrer Höhe einstellbar ist und zwar zumindest in eine erste Höhenlage, in welcher sich die Bürste 22 in einer Verwahrungsposition entfernt von der Ausgabestelle 4 befindet, so dass eine Rohrpostbüchse 6 mittels der Greifvorrichtung 5 an die Ausgabestelle 4 gebracht werden kann, und eine zweite Höhenlage, in welcher eine an der Ausgabestelle 4 positionierte und geöffnete Rohrpostbüchse 6 von der Bürste 22 durchdrungen ist.

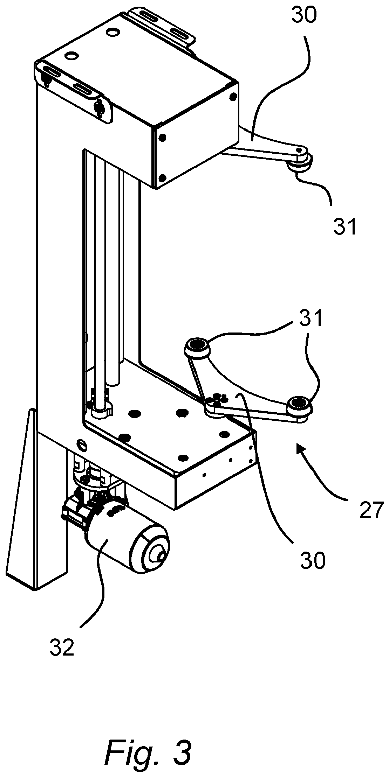

Die Rohrpoststation 1 weist, wie insbesondere in Fig. 3 gezeigt ist, eine der Ausgabestelle 4 zugeordnete Öffnungsvorrichtung 27 auf, die ausgebildet ist, sowohl einen an dem oberen Ende der Rohrpostbüchse 6 vorhandenen ersten Büchsendeckel 6a zu öffnen, als auch einen an dem gegenüberliegenden unteren Ende der Rohrpostbüchse 6 vorhandenen zweiten Büchsendeckel 6b zu öffnen.

Der Verfahrens- und Öffnungsmechanismus besteht insoweit aus zwei Systembaugruppen, die im Zusammenspiel in der Station funktionieren. Hierbei führt die Lineareinheit angetrieben durch einen Schrittmotor einen horizontalen Verfahrweg in Richtung des Öffnungsmechanismus (Öffnungsvorrichtung 27) aus. Der an der Lineareinheit befindliche Greifer (Greifvorrichtung 5) wird durch eine (Gleichstrom-) Getriebemotorkombination angetrieben. Greiferarme 28.1, 28.2 erfassen die Rohrpostbüchse 6 und transportieren diese. Um diese Greifarme 28.1, 28.2 nur entsprechend des Büchsendurchmessers zu schließen, sowie bei geöffneten Greifarmen 28.1, 28.2 die Rohrpostbüchse 6 am Sendelift passieren zu können, werden Sensoren 29 unterhalb einer Indexscheibe ausgelesen.

An dem Öffnungsmechanismus (Öffnungsvorrichtung 27) in Position gebracht (die Position kann durch Software vorgegeben sein) werden die Büchsendeckel 6a, 6b durch die an den Schwenkarmen 30 (Fig. 3) befindlichen Führungsrollen 31 mit einer Drehbewegung von 180° um die Rotationsachse der Büchsendeckelbefestigung verdreht. Die Drehrichtung ist dabei mittels eines Antriebsmotors 32 invers ausgeführt um die gegenüberstehenden Büchsendeckel 6a, 6b in die jeweilige Öffnungsposition zu verfahren. Eine Welle verbindet hier die beiden Getriebe der Öffnungsgabeln (Schwenkarme 30). Die Endposition wird durch entsprechende Sensoren an den Nocken, die sich an den Antriebswellen befinden, erfasst. Analog zum Öffnungsvorgang der Rohrpostbüchse 6 erfolgt die Schließung der Büchsendeckel 6a, 6b in entgegengesetzter Drehrichtung.

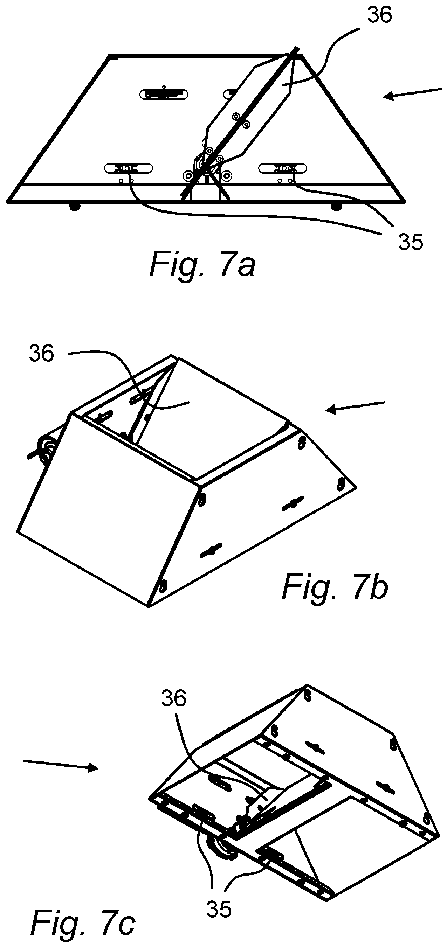

Wie in Fig. 7a bis Fig. 7c gezeigt ist, weist die Rohrpoststation 1 einen unterhalb der Ausgabestelle 4 angeordneten Separator 33 auf, der ausgebildet ist, in Abhängigkeit der durch die Informationserfassungseinrichtung 11 ausgelesenen Information aus dem Informationsträger 12 der in der Rohrpoststation 1 angekommenen Rohrpostbüchse 6, den mittels des ersten Entleerungswerkzeugs 9.1 oder des zweiten Entleerungswerkzeugs 9.2 aus der Rohrpostbüchse 6 ausgegebenen Transportgegenstand entweder in eine erste Ausgabeschütte 34.1 der Rohrpoststation 1 auszugeben oder in eine von der ersten Ausgabeschütte 34.1 verschiedene zweite Ausgabeschütte 34.2 der Rohrpoststation 1 auszugeben.

Der Separator 33 weist im Falle des vorliegenden Ausführungsbeispiels ergänzend zwei Störungssensoren 35 auf, die ausgebildet sind, einen dem Separator 33 hängengebliebenen Transportgegenstand zu detektieren und ein die Störung kennzeichnendes Störungssignal zu erzeugen.

Mit dem Eintreffen der Rohrpostbüchse 6 an der Rohrpoststation 1 wird auch die Vorbereitung des Separators 33 auf die erste Stellung oder die zweite Stellung in Abhängigkeit der zum aktuellen Transport im System hinterlegten Informationen parallel eingeleitet. Der unter dem Öffnungsmechanismus (Öffnungsvorrichtung 27) befindliche Separator 33 ermöglicht die Separierung der empfangenen Inhalte z.B. nach vom Kunden fachlich vorgegebenen Kriterien. Die beiden Positionen einer sich bewegenden d.h. einstellbaren Platte 36 werden ebenfalls durch Näherungsschalter und einem an der Platte 36 befindlichen Magnet detektiert.

Des Weiteren ist, wie bereits erwähnt, der Separator 33 mit Störungssensoren 35 ausgestattet. Beispielsweise zwei Lichtschranken, ein oder mehrere Laserstrahlen und/oder ein Lichtvorhang, angeordnet beispielsweise über den beiden Auslässen unterhalb der Baugruppe des Separators 33, erfassen ggf. einen Rückstau des Transportgegenstandes. Ebenso wird dadurch ein Quetschen des Transportgegenstandes durch die Platte 36 an den Außenkanten vermieden.

## Patentansprüche

1. Rohrpoststation, aufweisend ein Stationsgehäuse (2) mit einer Empfangsstelle (3) und einer Ausgabestelle (4), sowie einer im Stationsgehäuse (2) zwischen der Empfangsstelle (3) und der Ausgabestelle (4) automatisch verfahrbare Greifvorrichtung (5), die ausgebildet ist, eine an der Empfangsstelle (3) eingetroffene Rohrpostbüchse (6) automatisch zu greifen und an die Ausgabestelle (4) zu bewegen, des Weiteren aufweisend wenigstens eine an die Ausgabestelle (4) anschließende Entnahmestelle (7), **gekennzeichnet durch** einen der Ausgabestelle (4) zugeordneten Werkzeugwechsler (8), der wenigstens ein erstes Entleerungswerkzeug (9.1) und ein vom ersten Entleerungswerkzeug (9.1) verschiedenes zweites Entleerungswerkzeug (9.2) aufweist, wobei der Werkzeugwechsler (8) eine Antriebsvorrichtung (10) aufweist, die ausgebildet ist, zum automatischen Bewegen wahlweise des ersten Entleerungswerkzeugs (9.1) oder des zweiten Entleerungswerkzeugs (9.2) in eine Arbeitsstellung, in der das jeweils ausgewählte Entleerungswerkzeug (9.1, 9.2) bezüglich einer an der Ausgabestelle (4) positionierten Rohrpostbüchse (6) ausgerichtet ist, um durch eine Stellbewegung des ausgewählten Entleerungswerkzeugs (9.1, 9.2) einen in der Rohrpostbüchse (6) vorhandenen Transportgegenstand auszugeben, so dass der aus der Rohrpostbüchse (6) ausgegebene Transportgegenstand zur Entnahmestelle (7) gelangt.

2. Rohrpoststation nach Anspruch 1, **gekennzeichnet durch** eine Informationserfassungseinrichtung (11), die ausgebildet ist, einen Informationsträger (12) einer in der Rohrpoststation (1) angekommenen Rohrpostbüchse (6) zu erfassen, indem aus dem Informationsträger (12) wenigstens eine Information mittels der Informationserfassungseinrichtung (11) ausgelesen wird, wobei die Antriebsvorrichtung (10) des Werkzeugwechslers (8) ausgebildet ist, angesteuert durch eine Steuervorrichtung (13) in Abhängigkeit der durch die Informationserfassungseinrichtung (11) ausgelesenen Information entweder das erste Entleerungswerkzeug (9.1) oder das zweite Entleerungswerkzeug (9.2) automatisch in die Arbeitsstellung zu bewegen.

3. Rohrpoststation nach Anspruch 1 oder 2, **dadurch gekennzeichnet, dass** der Werkzeugwechsel (8) einen in dem Stationsgehäuse (2) automatisch verstellbaren Schlitten (14) aufweist, an dem das erste Entleerungswerkzeug (9.1) und das zweite Entleerungswerkzeug (9.2) zueinander benachbart angeordnet sind, wobei der Schlitten (14) zwischen einer ersten Schlittenstellung, in der sich das erste Entleerungswerkzeug (9.1) in seiner Arbeitsstellung befindet und einer zweiten Schlittenstellung, in der sich das zweite Entleerungswerkzeug (9.2) in seiner Arbeitsstellung befindet, hin und her verstellbar ist.

4. Rohrpoststation nach einem der Ansprüche 1 bis 3, **dadurch gekennzeichnet, dass** das erste Entleerungswerkzeug (9.1) wenigstens einen höhenverstellbar gelagerten Finger (15) aufweist, der an einem ersten Hubschlitten (16) mittels eines ersten Motors (17) automatisch in seiner Höhe einstellbar ist und zwar zumindest in eine erste Höhenlage, in welcher sich der wenigstens eine Finger (15) in einer Verwahrungsposition entfernt von der Ausgabestelle (4) befindet, so dass eine Rohrpostbüchse (6) mittels der Greifvorrichtung (5) an die Ausgabestelle (4) gebracht werden kann, und eine zweite Höhenlage, in welcher der wenigstens eine Finger (15) in eine an der Ausgabestelle (4) positionierte und geöffnete Rohrpostbüchse (6) eingreift, um den in der Rohrpostbüchse (6) vorhandenen Transportgegenstand auszugeben.

5. Rohrpoststation nach Anspruch 4, **dadurch gekennzeichnet, dass** der wenigstens eine Finger (15) in einer mit dem ersten Hubschlitten (16) verbundenen Fingerführung (18) höhenverschiebbar gelagert ist, wobei der wenigstens eine Finger (15) an seinem oberen Ende mit einem Gewicht (19) und/oder einem Anschlag (20) versehen ist, wobei der wenigstens eine Finger (15), das Gewicht (19) und/oder der Anschlag (20) ausgebildet sind, mittels Schwerkraftwirkung des Eigengewichts des wenigstens einen Fingers (15), des Gewichts (19) und/oder des Anschlags (20) den wenigstens einen Finger (15) in seine zweite Höhenlage zu treiben und aufgrund der höhenverschiebbaren Lagerung mittels der Fingerführung (18) der wenigstens eine Finger (15) in Richtung der ersten Höhenlage ausweichen kann, wenn sich der Hubschlitten (16) nach unten bewegt und die zum Ausgeben des Transportgegenstandes aus der Rohrpostbüchse (6) notwendige Ausgabekraft die durch das Eigengewicht des wenigstens einen Fingers (15), des Gewichtes (19) und/oder des Anschlags (20) konstruktiv vorbestimmte Gewichtskraft übersteigt.

6. Rohrpoststation nach Anspruch 5, **dadurch gekennzeichnet, dass** die Rohrpoststation (1) einen dem wenigstens einen Finger (15) zugeordneten Positionssensor (21) aufweist, der ausgebildet ist, ein Anheben des wenigstens einen Fingers (15) relativ zur Fingerführung (18) zu detektieren, wenn während eines Absenkens des Hubschlittens (16) die Fingerführung (18) von der ersten Höhenlage für den wenigstens einen Finger (15) sich in die zweite Höhenlage für den wenigstens einen Finger (15) bewegt.

7. Rohrpoststation nach einem der Ansprüche 1 bis 6, **dadurch gekennzeichnet, dass** das zweite Entleerungswerkzeug (9.2) eine höhenverstellbar gelagerte Bürste (22) aufweist, die an einem zweiten Hubschlitten (26) mittels eines zweiten Motors (24) automatisch in ihrer Höhe einstellbar ist und zwar zumindest in eine erste Höhenlage, in welcher sich die Bürste (22) in einer Verwahrungsposition entfernt von der Ausgabestelle (4) befindet, so dass eine Rohrpostbüchse (6) mittels der Greifvorrichtung (5) an die Ausgabestelle (4) gebracht werden kann, und eine zweite Höhenlage, in welcher eine an der Ausgabestelle (4) positionierte und geöffnete Rohrpostbüchse (6) von der Bürste (22) durchdrungen ist.

8. Rohrpoststation nach einem der Ansprüche 1 bis 7, **dadurch gekennzeichnet, dass** die Rohrpoststation (1) eine der Ausgabestelle (4) zugeordnete Öffnungsvorrichtung (27) aufweist, die ausgebildet ist, sowohl einen an dem oberen Ende der Rohrpostbüchse (6) vorhandenen ersten Büchsendeckel (6a) zu öffnen, als auch einen an dem gegenüberliegenden unteren Ende der Rohrpostbüchse (6) vorhandenen zweiten Büchsendeckel (6b) zu öffnen.

9. Rohrpoststation nach einem der Ansprüche 2 bis 8, **dadurch gekennzeichnet, dass** die Rohrpoststation (1) einen unterhalb der Ausgabestelle (4) angeordneten Separator (33) aufweist, der ausgebildet ist, in Abhängigkeit der durch die Informationserfassungseinrichtung (11) ausgelesenen Information aus dem Informationsträger (12) der in der Rohrpoststation (1) angekommenen Rohrpostbüchse (6), den mittels des ersten Entleerungswerkzeugs (9.1) oder des zweiten Entleerungswerkzeugs (9.2) aus der Rohrpostbüchse (6) ausgegebenen Transportgegenstand entweder in eine erste Ausgabeschütte (34.1) der Rohrpoststation (1) auszugeben oder in eine von der ersten Ausgabeschütte (34.1) verschiedene zweite Ausgabeschütte (34.2) der Rohrpoststation (1) auszugeben.

10. Rohrpoststation nach einem der Ansprüche 1 bis 9, **dadurch gekennzeichnet, dass** die Ausgabestelle (4), die Entnahmestelle (7) und/oder der Separator (33) einen Störungssensor (35) aufweist, der ausgebildet ist, einen an der Ausgabestelle (4), an der Entnahmestelle (7) und/oder an dem Separator (33) hängengebliebenen Transportgegenstand zu detektieren und ein die Störung kennzeichnendes Störungssignal zu erzeugen.

## Claims

1. Pneumatic-tube station comprising a station housing (2) with a receiving point (3) and a dispensing point (4), and with a gripping apparatus (5) which is automatically movable in the station housing (2) between the receiving point (3) and the dispensing point (4) and which is configured to automatically grip a pneumatic-tube container (6) which has reached the receiving point (3) and to move it to the dispensing point (4), further comprising at least one removal point (7) adjoining the dispensing point (4), **characterized by** a tool changer (8) which is assigned to the dispensing point (4) and which comprises at least a first emptying tool (9.1) and a second emptying tool (9.2) which is different from the first emptying tool (9.1), wherein the tool changer (8) comprises a drive apparatus (10) which is configured to automatically move either the first emptying tool (9.1) or the second emptying tool (9.2) into a working position in which the respectively selected emptying tool (9.1, 9.2) is oriented with respect to a pneumatic-tube container (6) positioned at the dispensing point (4) in order to dispense an article to be transported, which is present in the pneumatic-tube container (6), by way of an actuating movement of the selected emptying tool (9.1, 9.2), with the result that the article to be transported dispensed from the pneumatic-tube container (6) passes to the removal point (7).

2. Pneumatic-tube station according to Claim 1, **characterized by** an information capture device (11) which is configured to capture an information carrier (12) of a pneumatic-tube container (6) which has arrived in the pneumatic-tube station (1), in that at least one item of information is read from the information carrier (12) by means of the information capture device (11), wherein the drive apparatus (10) of the tool changer (8) is configured, actuated by a control apparatus (13) in dependence on the information read by the information capture device (11), to automatically move either the first emptying tool (9.1) or the second emptying tool (9.2) into the working position.

3. Pneumatic-tube station according to Claim 1 or 2, **characterized in that** the tool changer (8) comprises a carriage (14) which is automatically adjustable in the station housing (2) and on which the first emptying tool (9.1) and the second emptying tool (9.2) are arranged adjacently to one another, wherein the carriage (14) is adjustable back and forth between a first carriage position, in which the first emptying tool (9.1) is in its working position, and a second carriage position, in which the second emptying tool (9.2) is in its working position.

4. Pneumatic-tube station according to one of Claims 1 3, **characterized in that** the emptying tool (9.1) comprises at least one finger (15) which is mounted in a height-adjustable manner and the height of which is automatically settable on a first lifting carriage (16) by means of a first motor (17), specifically at least into a first height position, in which the at least one finger (15) is in a safekeeping position remote from the dispensing point (4) such that a pneumatic-tube container (6) can be brought to the dispensing point (4) by means of the gripping apparatus (5), and a second height position, in which the at least one finger (15) engages into an open pneumatic-tube container (6) positioned at the dispensing point (4) in order to dispense the article to be transported which is present in the pneumatic-tube container (6).

5. Pneumatic-tube station according to Claim 4, **characterized in that** the at least one finger (15) is mounted in a height-displaceable manner in a finger guide (18) which is connected to the first lifting carriage (16), wherein the at least one finger (15) is provided at its upper end with a weight (19) and/or a stop (20), wherein the at least one finger (15), the weight (19) and/or the stop (20) are configured to drive the at least one finger (15) into its second height position by means of the gravitational force effect of the inherent weight of the at least one finger (15), of the weight (19) and/or of the stop (20), and owing to the height-displaceable mounting by means of the finger guide (18), the at least one finger (15) can yield in the direction of the first height position if the lifting carriage (16) moves downwards and the dispensing force required for dispensing the article to be transported from the pneumatic-tube container (6) exceeds the weight force which is predetermined in design terms by the inherent weight of the at least one finger (15), of the weight (19) and/or of the stop (20).

6. Pneumatic-tube station according to Claim 5, **characterized in that** the pneumatic-tube station (1) comprises a position sensor (21) which is assigned to the at least one finger (15) and which is configured to detect raising of the at least one finger (15) relative to the finger guide (18) if, during lowering of the lifting carriage (16), the finger guide (18) moves from the first height position for the at least one finger (15) into the second height position for the at least one finger (15).

7. Pneumatic-tube station according to one of Claims 1 to 6, **characterized in that** the second emptying tool (9.2) comprises a brush (22) which is mounted in a height-adjustable manner and the height of which is automatically settable on a second lifting carriage (26) by means of a second motor (24), specifically at least into a first height position, in which the brush (22) is in a safekeeping position remote from the dispensing point (4) such that a pneumatic-tube container (6) can be brought to the dispensing point (4) by means of the gripping apparatus (5), and a second height position, in which an open pneumatic-tube container (6) positioned at the dispensing point (4) is penetrated by the brush (22).

8. Pneumatic-tube station according to one of Claims 1 7, **characterized in that** the pneumatic-tube station (1) comprises an opening apparatus (27) which is assigned to the dispensing point (4) and which is configured both to open a first container cover (6a) which is present at the upper end of the pneumatic-tube container (6) and to open a second container cover (6b) which is present at the opposite lower end of the pneumatic-tube container (6).

9. Pneumatic-tube station according to one of Claims 2 to 8, **characterized in that** the pneumatic-tube station (1) comprises a separator (33) which is arranged below the dispensing point (4) and which is configured, in dependence on the information read by the information capture device (11) from the information carrier (12) of the pneumatic-tube container (6) which has arrived in the pneumatic-tube station (1), to dispense the article to be transported, which is dispensed by means of the first emptying tool (9.1) or the second emptying tool (9.2) from the pneumatic-tube container (6), either into a first dispensing chute (34.1) of the pneumatic-tube station (1) or into a second dispensing chute (34.2), which is different from the first dispensing chute (34.1), of the pneumatic-tube station (1).

10. Pneumatic-tube station according to one of Claims 1 to 9, **characterized in that** the dispensing point (4), the removal point (7) and/or the separator (33) comprises a fault sensor (35) which is configured to detect an article to be transported which has become stuck at the dispensing point (4), at the removal point (7) and/or at the separator (33) and to generate a signal identifying the fault.

## Revendications

1. Station de courrier par tube, présentant un boîtier de station (2) avec un emplacement de réception (3) et un emplacement de distribution (4), ainsi qu'un dispositif de préhension (5) pouvant être déplacé automatiquement dans le boîtier de station (2) entre l'emplacement de réception (3) et l'emplacement de distribution (4), qui est configuré pour saisir automatiquement une douille de courrier par tube (6) arrivée à l'emplacement de réception (3) et la déplacer vers l'emplacement de distribution (4), présentant en outre au moins un emplacement de prélèvement (7) se raccordant à l'emplacement de distribution (4), **caractérisée par** un échangeur d'outils (8) associé à l'emplacement de distribution (4), qui présente au moins un premier outil de vidage (9.1) et un deuxième outil de vidage (9.2) différent du premier outil de vidage (9.1), l'échangeur d'outils (8) présentant un dispositif d'entraînement (10) qui est configuré pour déplacer automatiquement, au choix, le premier outil de vidage (9.1) ou le deuxième outil de vidage (9.2) dans une position de travail dans laquelle l'outil de vidage (9.1, 9.2) respectivement choisi est orienté par rapport à une douille de courrier par tube (6) positionnée à l'emplacement de distribution (4) afin de distribuer un objet transporté présent dans la douille de courrier par tuber (6) par un mouvement de réglage de l'outil de vidage choisi (9.1, 9.2), de telle sorte que l'objet transporté distribué à partir de la douille de courrier par tube (6) atteint l'emplacement de prélèvement (7).

2. Station de courrier par tube selon la revendication 1, **caractérisée par** un appareil de détection d'informations (11) qui est configuré pour détecter un support d'informations (12) d'une douille de courrier par tube (6) arrivée dans la station de courrier par tube (1), en lisant au moins une information à partir du support d'informations (12) au moyen de l'appareil de détection d'informations (11), le dispositif d'entraînement (10) de l'échangeur d'outil (8) étant configuré pour, commandé par un dispositif de commande (13) en fonction de l'information lue par l'appareil de détection d'informations (11), déplacer automatiquement soit le premier outil de vidage (9. 1), soit le deuxième outil de vidage (9.2) dans la position de travail.

3. Station de courrier par tube selon la revendication 1 ou 2, **caractérisée en ce que** l'échangeur d'outil (8) présente un chariot (14) déplaçable automatiquement dans le boîtier de station (2), sur lequel le premier outil de vidage (9.1) et le deuxième outil de vidage (9.2) sont agencés au voisinage l'un de l'autre, le chariot (14) pouvant être déplacé en va-et-vient entre une première position de chariot, dans laquelle le premier outil de vidage (9.1) se trouve dans sa position de travail, et une deuxième position de chariot, dans laquelle le deuxième outil de vidage (9.2) se trouve dans sa position de travail.

4. Station de courrier par tube selon l'une quelconque des revendications 1 à 3, **caractérisée en ce que** le premier outil de vidage (9.1) présente au moins un doigt (15) monté de manière déplaçable en hauteur, dont la hauteur peut être réglée automatiquement sur un premier chariot de levage (16) au moyen d'un premier moteur (17), et ce au moins dans une première position de hauteur, dans laquelle l'au moins un doigt (15) se trouve dans une position d'attente éloignée de l'emplacement de distribution (4), de telle sorte qu'une douille de courrier par tube (6) peut être amenée à l'emplacement de distribution (4) au moyen du dispositif de préhension (5), et une deuxième position de hauteur, dans laquelle l'au moins un doigt (15) s'engage dans une douille de courrier par tube (6) positionnée et ouverte à l'emplacement de distribution (4), afin de distribuer l'objet transporté présent dans la douille de courrier par tube (6).

5. Station de courrier par tube selon la revendication 4, **caractérisée en ce que** l'au moins un doigt (15) est monté de manière déplaçable en hauteur dans un guide de doigt (18) relié au premier chariot de levage (16), l'au moins un doigt (15) étant pourvu à son extrémité supérieure d'un poids (19) et/ou d'une butée (20), l'au moins un doigt (15), le poids (19) et/ou la butée (20) étant configurés pour entraîner l'au moins un doigt (15) vers sa deuxième position de hauteur au moyen de l'effet de pesanteur du poids propre de l'au moins un doigt (15), du poids (19) et/ou de la butée (20) et, en raison du montage déplaçable en hauteur au moyen du guide de doigt (18), l'au moins un doigt (15) pouvant s'écarter en direction de la première position de hauteur lorsque le chariot de levage (16) se déplace vers le bas et la force de distribution nécessaire pour la distribution de l'objet transporté à partir de la douille de courrier par tube (6) dépasse la force de poids prédéterminée par la construction par le poids propre de l'au moins un doigt (15), du poids (19) et/ou de la butte (20).

6. Station de courrier par tube selon la revendication 5, **caractérisée en ce que** la station de courrier par tube (1) présente un capteur de position (21) associé à l'au moins un doigt (15), qui est configuré pour détecter un soulèvement de l'au moins un doigt (15) par rapport au guide de doigt (18) lorsque, pendant un abaissement du chariot de levage (16), le guide de doigt (18) se déplace de la première position de hauteur pour l'au moins un doigt (15) vers la deuxième position de hauteur pour l'au moins un doigt (15).

7. Station de courrier par tube selon l'une quelconque des revendications 1 à 6, **caractérisée en ce que** le deuxième dispositif de vidage (9.2) présente une brosse (22) montée de manière déplaçable en hauteur, dont la hauteur peut être réglée automatiquement sur un deuxième chariot de levage (26) au moyen d'un deuxième moteur (24), et ce au moins dans une première position de hauteur, dans laquelle la brosse (22) se trouve dans une position d'attente éloignée de l'emplacement de distribution (4), de telle sorte qu'une douille de courrier par tube (6) peut être amenée à l'emplacement de distribution (4) au moyen du dispositif de préhension (5), et une deuxième position de hauteur, dans laquelle une douille de courrier par tube (6) positionnée et ouverte à l'emplacement de distribution (4) est pénétrée par la brosse (22).

8. Station de courrier par tube selon l'une quelconque des revendications 1 à 7, **caractérisée en ce que** la station de courrier par tube (1) présente un dispositif d'ouverture (27) associé à l'emplacement de distribution (4), qui est configuré pour ouvrir aussi bien un premier couvercle de douille (6a) présent à l'extrémité supérieure de la douille de courrier par tube (6) qu'un deuxième couvercle de douille (6b) présent à l'extrémité inférieure opposée de la douille de courrier par tube (6) .

9. Station de courrier par tube selon l'une quelconque des revendications 2 à 8, **caractérisée en ce que** la station de courrier par tube (1) présente un séparateur (33) agencé en dessous de l'emplacement de distribution (4), qui est configuré pour, en fonction de l'information lue par le dispositif de détection d'informations (11) à partir du support d'informations (12) de la douille de courrier par tube (6) arrivée dans la station de courrier par tube (1), distribuer l'objet transporté distribué au moyen du premier outil de vidage (9.1) ou du deuxième outil de vidage (9.2) à partir de la douille de courrier par tube (6) soit dans un premier bac de distribution (34.1) de la station de courrier par tube (1), soit dans un deuxième bac de distribution (34.2) de la station de courrier par tube (1), différent du premier bac de distribution (34.1).

10. Station de courrier par tube selon l'une quelconque des revendications 1 à 9, **caractérisée en ce que** l'emplacement de distribution (4), l'emplacement de prélèvement (7) et/ou le séparateur (33) présentent un capteur de perturbation (35) qui est configuré pour détecter un objet transporté resté accroché à l'emplacement de distribution (4), à l'emplacement de prélèvement (7) et/ou au séparateur (33) et pour générer un signal de perturbation caractérisant la perturbation.
